# EUROPEAN PATENT SPECIFICATION

(11) **EP 1 714 074 B1**
(45) Date of publication and mention of the grant of the patent: **18.04.2012**
(21) Application number: 05707384.3
(22) Date of filing: 14.02.2005
(51) Int. Cl.: F23C 9/00, F23D 11/40

(54) **A METHOD OF OPERATING A BURNER, AND A BURNER FOR LIQUID AND/OR GASEOUS FUELS**
VERFAHREN ZUM BETREIBEN EINES BRENNERS UND BRENNER FÜR FLÜSSIGE UND/ODER GASFÖRMIGE BRENNSTOFFE
PROCEDE DE FONCTIONNEMENT D'UN BRULEUR, ET BRULEUR POUR COMBUSTIBLES LIQUIDES ET/OU GAZEUX

(30) Priority: 13.02.2004 US 544616 P
(43) Date of publication of application: 25.10.2006
(73) Proprietor: Elster GmbH, 55252 Mainz-Kastel (DE)
(72) Inventor: MUNKO, Andreas, 42107 Wuppertal (DE); VON SCHWEINITZ, Horst, 44803 Bochum (DE)
(74) Representative: Preuss, Udo
(86) International application number: PCT/EP2005/001481
(87) International publication number: WO 2005/080869

(56) References cited:
- DE-A1- 10 113 132
- FR-A- 2 825 777
- GB-A- 2 053 447
- US-A- 4 629 413
- US-A1- 2003 054 303
- REMMEY B: "JET FIRING WITH PULSE/PROPORTIONAL CONTROL (AM/FM)" CERAMIC ENGINEERING AND SCIENCE PROCEEDINGS, COLUMBUS, US, vol. 15, no. 1, January 1994 (1994-01), pages 167-175, XP000425577 ISSN: 0196-6219

## Description

### Technical field

The present invention relates to a method of operating a burner, and a burner, in particular a radiant heating tube burner. A burner of the type of interest can be operated with liquid and/or gaseous fuels. It is also possible, for example, to achieve a cooler flame and/or better mixing of fuel and combustion air or also with flue gas by recirculating combustion flue gases to a combustion zone and/or a mixing zone. By recirculation it is possible to reduce the average and the maximum temperature of the flame such that the thermally generated nitrogen oxide emission is reduced.

If liquid fuels are used, the recirculation of combustion flue gases can be utilized to evaporate the liquid fuels when they are combusted.

### Background of the invention

In many technical applications in the field of manufacturing industrial furnaces, it is necessary to transfer heat to matter in a protective or reactive gas. Electrical heaters or radiant heating tubes, which are usually fired with gas burners, provide indirect heat to the furnaces used. The radiant heating tube, which is of metal or a ceramic material, is constructed in such a way that in operation it transfers the heat to the matter by means of radiation.

While the realization of requirements with respect to the combustion in the field of gas-fired radiant heating tubes have greatly advanced during the last few years, the combustion of oil as a fuel in a radiant heating tube is an industrial problem. If conventional burner technology is used there are exceedingly high NOₓ emissions and problems of deposit formation resulting from the incombustible components of the fuel oil. The use of combustion air preheating can also lead to problems with fuel atomization, since the maximally allowable temperatures in the area of the oil nozzle are far below the desired combustion air preheating temperature.

To solve these problems, a burner with a recuperator for radiant heating tubes was developed in the Lehrgebiet für Energie- und Stofftransport / EST (Department of Heat and Mass Transfer), RWTH Aachen, Germany. This burner, in its oil burner version, comprises various components such as a recuperator and flame tube, as well as a mixing assembly and an evaporation tube. The components are arranged in such a way that flue gas can be recirculated in the evaporation or mixing tube and into the flame tube. The combustion air is supplied to the burner in a step-wise manner. Thus the primary air enters into the evaporation or mixing tube and the secondary air enters into the flame tube. It is possible to differentiate between the states of stationary operation and cold start-up operation. In the latter case, the recirculation of flue gas into the evaporation tube must be prevented. For further details, please refer to the publication "Low-NOₓ Strahlheizrohr-Brenner fur flüssige und gasförmige Brennstoffe" ("Low-NOₓ radiant heating tube burners for liquid and gaseous fuels"), by Dipl.-Ing. A. Munko, Dr. Ing. F. Kleine-Jäger, Prof. Dr. Ing. H. Köhne, Lehrgebiet für Energie- und Stofftransport (Dept. of Heat and Mass Transfer), RWTH Aachen, Germany, Dr. Ing. W. Diemar, LOI Thermprocess, Essen, Germany, GWI, volume 5, 2002. In particular, in this burner the liquid fuel is fed into the evaporating tube through an axially arranged jet head by means of a commercially available swirl-pressure atomization nozzle. The primary air is fed into the evaporating tube via tubes which are concentrically arranged with respect to the oil nozzle. The high exit speed of the primary air results in a recirculation of flue gas into the evaporation tube due to the injector effect. The recirculated flue gas flows out of the area of the outer tube through an annular slot between the recuperator and the evaporating tube.

In the evaporating tube, heat is transferred to the fuel by hot flue gas, the heat transfer from the hot tube wall and upstream heat radiation from the glowing flame tube. This heat supply results in complete evaporation of the liquid fuel so that at the end of the evaporating tube, a completely gaseous, homogeneous mixture of fuel, primary air and flue gas is provided. If the burner is operated with gaseous fuel, the described task of fuel evaporation is eliminated. In that case, the evaporating tube serves to homogeneously mix combustion gas, primary air and flue gas. The diameter and length of the evaporating tube are chosen such that there is no ignition of the fuel-air mixture within the evaporating tube. While the conditions for autoignition are given here, the time the mixture remains in the tube is shorter than the ignition delay. The mixture enters the flame tube in a non-combusted state. At the transition from the evaporating tube to the flame tube, the secondary air preheated in the recuperator is fed in. Due to the high exit impulse of the secondary air from the feeding nozzles, flue gas recirculation is achieved in the flame tube. In the flame tube, the mixing of the gas streams and the stabilization of the flame is achieved. In order to ensure high efficiency of the radiant heating tube, the ratio of the preheated secondary air flow and the non-preheated primary air flow must be adjusted to be as high as possible. Then there is a strongly sub-stoichiometric fuel-air mixture in the evaporating tube. The stationary operation of the burner is characterized by the autoignition of the fuel-air mixture and the stabilization of the flame in the flame tube. Stationary operation is therefore only possible, after the radiant heating tube components have reached a high temperature level.

As indicated before, the secondary air preheated in the recuperator is fed to the entry opening of the flame tube via a plurality of feeding nozzles. A portion of the hot recirculated flue gases is passed to these feeding nozzles in countercurrent in an annular channel around the evaporating tube. This embodiment with feeding nozzles is relatively complex and expensive to manufacture.

DE 39 30 569 A1 discloses a mixing assembly for a burner with intake openings at the upstream end of the flame tube through which, due to the injector effect of the flow, flue gases from the environment are sucked into the flame tube. However, the combustion flue gases are not fed into a mixing zone separate from the combustion zone in which the fuel is mixed with the primary air. It is therefore obvious that a homogeneous mixture of the different material flows cannot be achieved before the combustion zone. This means that the formation of so-called hot spots, which critically contribute to the thermal formation of nitrogen oxides, cannot be avoided.

From EP 0 463 218 B1, a method and an apparatus for burning a fuel in a combustion chamber is known, by means of which the oxidation of fuels with air, while effectively utilizing the heat generated by the oxidation, is carried out and only a small amount of nitrogen oxides is generated. The method suggested here is carried out with normal combustion air and extremely high combustion exhaust air recycling (r ≥ 2), so that even when the air is completely preheated (ε = 1) the maximum temperatures arising with oxidation of less than 1500°C are below that which results when the fuel is combusted in flames. Recycling the combustion gases partially cooled down by useful heat and mixing them with the preheated combustion air is done in the following way. The combustion air in the form of air jets exiting from nozzles is fed through an essentially fuel-free area, for example, in which the air jets can be enveloped by and mixed with the combustion gases sucked in by the injector effect. It is deemed advantageous that the air jets are arranged in a ring and fuel is fed in the area surrounded by the air jets at a predetermined distance behind the nozzle opening.

DE 199 25 715 A1 explains a method and an apparatus for the homogeneous mixing of combustion air and combustion flue gases. The flue gases are mixed with air by internal recirculation, i.e. due to the injector effect of air, for example, in a place where there is no conversion of the fuel, so that the mixture becomes homogeneous. Basically, the hot combustion flue gases are recycled, however, in a mixing zone after they have transferred a certain amount of heat to air in a heat exchanger. The recirculated hot flue gases are introduced into a flow chamber in the same direction as the air and mixed there.

Finally, DE 23 03 280 A should also be mentioned, from which a burner with flue gas recycling is known. Again, the hot flue gases are recycled from the combustion chamber to the exit of the fuel by the injector effect of the combustion air. The fuel-air mixture formed after the fuel exit is mixed with the combustion air in a mixing tube, before it enters the combustion chamber behind the mixing tube and burns.

The combustion apparatus described in EP 0 386 732 is a two-fuel burner in which the air supply channel is closed off by a nozzle plate having first and second nozzles. A tube referred to as a flame tube in this document is arranged at a small distance from the nozzle plate, so that a flue gas circulating opening results. Another tube is coaxially disposed to the flame tube and spaced from the nozzle plate. The tube surrounds the nozzles and extends beyond their openings and into the flame tube. The recycled flue gas flows, split into two flue gas flows, together with the combustion air which is also split into two air flows by the nozzles, into the flame tube in such a manner that there are two separate flows of mixtures of flue gas and combustion air. This is supposed to achieve flame stabilization, which would eliminate the provision of internal structures for flame support.

US 4,708,638 A discloses a burner provided with an annular channel through which secondary air is supplied. The annular channel for the supply of the secondary air is intersected by channels for supplying the flue gas.

US 4,575,332 A, just like US 4,708,638 A, shows a burner implementation to reduce the formation of NOₓ, in which burnt-out flue gas is sucked from the firing chamber due to the injector effect of the primary air and supplied to the flame base between the primary air intake and the secondary air intake. As in the US 4,708,638 A, there are connection tubes to feed the secondary air through the hot, recirculated combustion flue gases.

US 2003/0054303 A1 discloses a method and apparatus for combustion of a fuel in which a first-stage fuel and a first-stage oxidant are introduced into a combustion chamber and ignited, forming a primary combustion chamber. A second-stage fuel is introduced into this combustion chamber downstream of the primary combustion zone and ignited, forming a secondary combustion zone. Secondary oxidant is introduced into the secondary combustion zone. No information relating to a defined recirculation of at least a portion of hot flue gases exiting the combustion zone into a mixing zone are given. No disclosure relating to a freely intersection of secondary air and a recycled portion of the hot flue gases in a transition area between the mixing zone and the combustion zone can be found at all.

In US 4,629,413 a premix burner and a method of its operation for combustion with a minimum of NOₓ emissions are disclosed. Here, the mixing of secondary air with the flame is delayed. The primary air and fuel are mixed in an extension tube. The mixture of fuel and primary air enters into the combustion chamber at the same level as the secondary air. Consequently, a large recirculation zone is formed at the base of the flame in the combustion chamber which should help to maintain flame stability. It is neither disclosed an arrangement comprising a mixing zone and a combustion zone nor a feeding of fuel and secondary air in these different zones.

### Summary of the invention

According to a first aspect of the present invention, for the first time, a method of operating a burner is disclosed in which fuel is fed in a mixing zone and secondary air is fed downstream from the mixing zone into a combustion zone spatially separate form the mixing zone and in which the fuel enriched by said secondary air reacts. At least a portion of the hot flue gases exiting the combustion zone is recycled into the mixing zone in such a way that the secondary air and the recycled portion of the flue gas freely intersect each other in a transition area between the mixing zone and the combustion zone in a countercurrent. In particular, with such a method it is possible to avoid using a complex nozzle or tube configuration to achieve the intersection of the two flows of secondary air and hot flue gases.

According to the present invention, at least a portion of the hot flue gases exiting from the combustion zone is recycled to the mixing zone. The fuel may be mixed with primary air in the mixing zone. In an embodiment of the present invention using primary air, the secondary air is then supplied to the fuel-primary-air mixture in the combustion zone. In other words: a method according to the present invention can also operate solely with a secondary air supply. In that case, the term "fuel-primary-air mixture" is to be replaced by "fuel". A supply of primary air is therefore optimal.

According to the present invention, it may thus be advantageous to mix the fuel-primary-air mixture exiting from the mixing zone with secondary air and to recycle a portion of the hot flue gases exiting from the combustion zone to the mixing zone. Herein the secondary air is passed through the first portion of the flue gas in a freely intersecting way in countercurrent in a transition area or space provided between the mixing zone and the combustion zone. The transition area or space can be configured, for example, as an annular slot or a cylinder. The portion of the flue gas intersecting the secondary air can be fed, for example, in countercurrent to the fuel-primary-air mixture flowing in the mixing zone to the beginning of the mixing zone. For this purpose a mixing tube is present, for example, which is surrounded by a tube concentrically arranged thereto. The portion of the flue gas is then fed through the thus defined annular space. The secondary air is mixed, for example, with the fuel-primary-air mixture at the exit from the mixing zone and/or in the area of the entry of the fuel-primary-air mixture into the combustion zone. Again, the flows are guided in such a way that the secondary air freely intersects, in countercurrent, the hot flue gases exiting from the combustion zone, which are recycled to the mixing zone. Unlike the prior art approaches for burners, for indirect or direct firing, a complicated and expensively manufactured nozzle and tube feeding of secondary air is eliminated. In particular, the plurality of feeding channels for the introduction of the secondary air into the combustion zone, such as shown in the initially mentioned publication "Low-NOₓ-Strahlheizrohr-Brenner für flussige und gasförmige Brennstoffe" ("Low-NOₓ radiant heating tube burner for liquid and gaseous fuels"), can be done without. It should also be noted that an exemplary embodiment of the present invention can be formed like a burner as shown in the mentioned publication. Moreover, such a burner can also be provided not only for direct firing, but also for indirect firing. In the latter case, the burner described here is equipped with a radiant heating tube, but it does not have, as mentioned above, secondary-air-supply tubes which extend into the combustion zone in order to have the flows intersect.

According to another aspect of the present invention, the guiding of the flows can be optimized by recycling the portion of the flue gas to the mixing zone in such a way that at least part of its heat is transferred to the secondary air. This serves to preheat the secondary air which improves the combustion process in the combustion zone by having the secondary air introduce a greater amount of heat.

Another exemplary embodiment of the present invention provides that the first portion of the flue gas is recycled to the mixing zone in such a way that, in addition to transferring heat to the secondary air, a portion of its heat is also transferred to the fuel-primary-air mixture in the mixing zone. This exemplary flue gas recycling also improves the mixing and/or combustion processes in the mixing or combustion zone, respectively.

In the above explained exhaust recirculation it may be advantageous to feed the portion of the flue gas both in countercurrent to the fuel-air mixture and in countercurrent to the secondary air between these two flows. This results in a heat transfer from the portion of the flue gas both to the secondary air flowing in countercurrent and to the fuel-primary-air mixture in the mixing zone, in a simple construction.

A simple construction for feeding the different flows provides that the portion of the flue gas is guided both to the fuel-primary-air mixture and to the secondary air by a partition. The partition can be formed, for example, by one or more tubes.

In another exemplary embodiment of the present invention, the mixing zone is formed by a mixing tube, within which the fuel is mixed with primary air. On the outside of the mixing tube, the flue gas is recirculated to the entry of the mixing zone, and the secondary air flows outside of the flue gas recirculation.

According to another aspect of the present invention it may be advantageous to recirculate a portion of the hot flue gases to the entry of the combustion zone. In this exemplary embodiment, the flue gases are thus not only recirculated to the mixing zone, but also to the combustion zone.

Another exemplary embodiment of the method according to the present invention provides that a portion of the flue gases is passed through a heat exchanger and then exhausted from the burner. In the heat exchanger, this portion of flue gas is fed in countercurrent to the secondary air. This is to achieve additional heating of the secondary air, which flows in countercurrent in the heat exchanger, and therefore to increase the energy potential at the entry into the combustion zone. For example, the heat exchanger may also be formed as a recuperator integrated in the burner. Basically, however, it is also possible to configure the heat exchanger so that it is separate from the burner.

Simple feeding of the flows can be achieved according to another exemplary embodiment of the method according to the present invention by not splitting the hot flue gases into portions until the hot flue gases have flowed to the beginning of the combustion zone in countercurrent to the fuel-primary-air mixture in the combustion zone. For example, such a feeding of the flows can be achieved by defining the combustion zone by means of a combustion tube. The fuel-primary-air mixture, which is mixed with the secondary air, then flows within the combustion tube. The flue gas flows on the outside of the combustion tube and is split into the above explained portions of flue gas in the area of the entry of the combustion tube. A portion of flue gas can, in turn, be split into a first portion and a second portion, wherein the first portion is recirculated to the mixing zone, while the second portion is recirculated to the combustion zone. Another portion of flue gas can be extracted and then fed through a heat exchanger or recuperator.

The feeding and introduction of the flows can be improved, for example, by having a portion of flue gas flow into the above-explained transition area (free space) between the mixing zone and the combustion zone in such a way that the portion of flue gas is introduced into the transition area in countercurrent to the secondary air. The portion of flue gas also flows radially further outside into the transition area than the secondary air introduced from the opposite side. In other words, the introduction openings for the secondary air are at a position radially further to the inside in the transition area than the opposite introduction openings for the portion of flue gas. For initiating the flue gas recirculation in the desired way, it may be advantageous for the fuel to be injected into the mixing zone with an impulse. It is also possible, however, to achieve this without an impulse. It should be noted that only one introduction opening for the secondary air may be sufficient, which would then be formed as an annular slot. The same also applies to the introduction opening for the portion of flue gas. With direct firing, the portion of flue gas freely flows into the transition area provided between the mixing zone and the combustion zone. According to another exemplary embodiment of the method according to the present invention, a portion of the flue gases is passed through a heat exchanger or recuperator and then exhausted from the burner. The primary air and the secondary air are then fed together in the recuperator in countercurrent to this portion of flue gas. This also achieves heating of the later primary air in a simple way.

According to still another exemplary embodiment of the method according to the present invention, the primary air and secondary air commonly flow over part of the distance in the recuperator. Then the primary air exits the recuperator through at least one exit opening and is then fed to the area of the fuel supply. The secondary air freely exits the end of the recuperator in such a way that it freely intersects the recirculated portion of flue gas in the transition area between the mixing zone and the combustion zone in countercurrent.

According to yet another exemplary embodiment of the method of the present invention, the primary air and the secondary air commonly flow to the end of the recuperator, after which the primary air is fed into the area of the fuel intake by means of a flow redirection means. The secondary air freely exits the end of the recuperator in such a way that it freely intersects the recirculated portion of flue gas in the transition area between the mixing zone and the combustion zone in countercurrent.

According to another aspect of the present invention, a burner according to the present invention for liquid or gaseous fuels comprises a fuel supply means for supplying the fuel into a mixing zone. A secondary air supply means is also provided, with the aid of which secondary air is fed into a combustion zone. The fuel combustion zone is downstream from the mixing zone. In the combustion zone reacts the fuel enriched by said secondary air. The fuel supply means is further back than the secondary air supply means. A flue gas recycling means is provided, with the aid of which at least a portion of the hot flue gases exiting the combustion zone is recycled into the mixing zone such that the secondary air and the recirculated portion of the first portion of flue gases freely intersect each other in a transition area between the mixing zone and the combustion zone in countercurrent.

An exemplary embodiment of the present invention comprises a mixing zone in which fuel and primary air are mixed with each other. The fuel is introduced into the mixing zone with the aid of the fuel supply means. The secondary air supply means feeds the secondary air into the combustion zone downstream from the mixing zone, where the fuel-primary-air mixture is mixed and ignited together with the secondary air.

Another exemplary embodiment of the present invention provides that a primary air supply means is present for supplying primary air into the mixing zone. The combustion zone in which the fuel-primary-air mixture reacts enriched by the secondary air is positioned downstream from the mixing zone. The flue gas recycling means is configured such that a portion of the flue gases is recirculated into the mixing zone and a portion of the flue gases is recirculated into the combustion zone.

It can be advantageous for the combustion zone to consist of a combustion tube, and for a flue gas recycling zone to be formed between the outer surface of the combustion tube and a radiant heating tube arranged coaxially thereto. This flue gas recycling zone opens into the transition area between the mixing zone and the combustion zone in the area of the end face of the combustion tube at a distance to the end face of the burner. One or more circumferentially evenly spaced exit openings for the secondary air open out into the transition area, which is configured, for example, as an annular slot or a cylindrical cavity between the mixing zone and the combustion zone. For example, the openings for the secondary air are arranged radially further to the inside than the exit zone of the flue gases, which opens out in countercurrent into the transition area, i. e. the gap between the combustion tube and the exit opening of the secondary air.

Another exemplary embodiment provides that the mixing zone be formed by a mixing tube which, in turn, is surrounded by a coaxial tube spaced from the mixing tube. The annular opening of the introduction orifice, which is formed by this arrangement, opens out into the transition area so that a portion of the hot flue gases is recirculated into this annular gap and sucked to the introduction opening in the mixing zone.

Advantageously, the primary air may flow through a plurality of openings into an area in front of the mixing tube, and the ring of introduction flow openings for the primary air can concentrically surround the openings for the injection of fuel.

Another exemplary embodiment of the burner according to the present invention provides that on the outside of the tube surrounding the mixing tube, the recuperator is provided for supplying secondary air, through which at least a portion of the flue gases exiting the combustion chamber is fed in countercurrent.

Generally, it may be provided for all above described burners according to the present invention, for direct or indirect firing, that the fuel supply means is spatially separated from the hot furnace areas or combustion zones, by being spatially separate. In particular, there may be a separation from the mixing zone and the combustion zone.

This spatial separation of the fuel supply means and the hot furnace or combustion areas is advantageous not only from the point of view of making a homogeneous fuel-air-combustion-exhaust-air mixture possible, but it also prevents overheating of the fuel. Another advantage of this burner design may be that the combustion flue gases which have already lost part of their heat, are recirculated into the mixing zone and the combustion zone, which are spatially separate from each other, so that the temperature of the recirculated combustion gases is lower than in burner designs, in which the recirculated flue gas is taken from the combustion chamber and has nearly flame temperature. Advantageously, in a burner design according to the present invention, both gaseous and liquid fuels can be used. By the dosed introduction of combustion flue gases, the fuel is preheated so that when the fuel is liquid it is at least partially evaporated. This approach also allows for at least a portion of the combustion air to be preheated by means of pre-cooling the combustion gases. The so-called overall recirculation ratio, i.e. the ratio of the overall recirculated combustion mass flow and the overall mass flow of combustion air, may well be increased at will with burners of the present invention.

### Short description of the drawings

For further explanation and better understanding, several exemplary embodiments will be described below in more detail with reference to the accompanying drawings, in which:
- Fig. 1: is a longitudinal sectional view of a first embodiment of a burner of the present invention, which is formed as a radiant heating tube;
- Fig. 2: is a partially cutaway elevational view of a radiant heating tube burner in which the radiant heating tube is formed as U-shaped tube;
- Fig. 3: is a longitudinal sectional view of another embodiment of a burner according to the present invention similar to the burner of Fig. 2, without a mixing tube;
- Fig. 4: is a table of numerous further variants of the embodiments shown in Figs. 1 to 3 of a burner of the present invention;
- Fig. 5: is a longitudinal sectional view of another embodiment of a burner of the present invention which is only equipped with one combustion tube in the furnace to be heated, but in a directly radiating configuration;
- Fig. 6: is a longitudinal sectional view of another embodiment of a burner according to the present invention which is similar to the one shown in Fig. 5, without a recuperator, without a combustion tube and without a mixing tube;
- Fig. 7: is a list in the form of a table of the variants of a burner according to the present invention for direct firing;
- Fig. 8: is a longitudinal sectional view of another embodiment of a burner according to the present invention in which the primary air is preheated together with the secondary air in a recuperator, wherein the top half of the figure shows the burner integrated into the wall of a furnace for direct firing and the bottom half of the figure shows the burner with a radiant heating tube for indirect firing; and
- Fig. 9: shows a longitudinal sectional view of another embodiment of a burner according to the present invention, in which unlike the burner shown in Fig. 8, primary air is passed right up to the end of the recuperator and, after the primary air is redirected, it then flows into the mixing zone, wherein, in Fig. 9, again, the top half of the figure shows the burner integrated into the wall of a furnace for direct firing while the bottom half of the figure shows the burner with a radiant heating tube for indirect firing.

It should also be noted that in all figures the same components are identified by the same reference numerals and that in the above-mentioned longitudinal sectional views, the top half of the figure shows in schematic form a stationary operation while the bottom half of the figure shows a cold start-up operation.

### Detailed description of exemplary embodiments of the invention

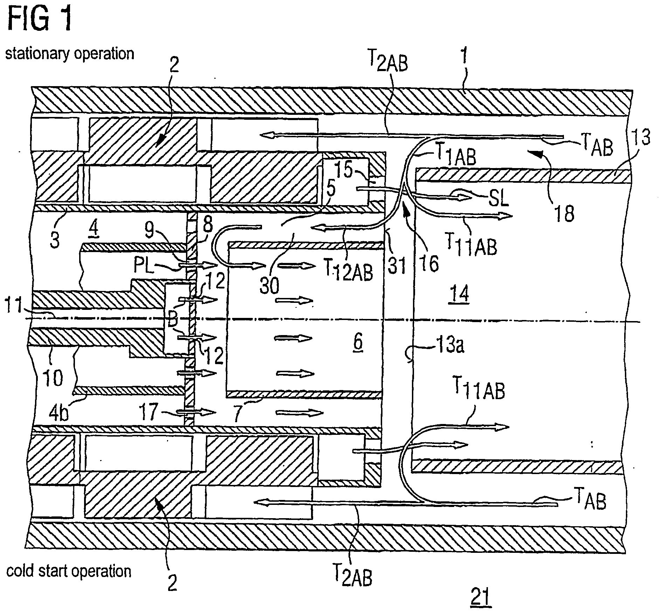

Fig. 1 shows a longitudinal sectional view of an embodiment of a burner according to the present invention for indirect firing. The burner comprises a radiant heating tube 1 which is configured as a barrel type radiant heating tube 20. In the conventional manner, the barrel type radiant heating tube 20 is arranged in furnace 21. The interior of furnace 21 is indirectly heated by radiant heat. Unlike a direct firing without a barrel or radiant heating tube 1, the two atmospheres in barrel type radiant heating tube 20 and in the interior of furnace 21, remain separate from each other.

In the radiant heating tube, as shown in Fig. 1, a recuperator 2 is arranged in an annular fashion around a center axis of radiant heating tube 1. Recuperator 2 has two flow channels separate from each other in the present example, an outer flow channel for outflowing flue gas T_{2AB} and an inner flow channel for inflowing secondary air SL. On the inside, recuperator 2 is defined by a tube 3. Tube 3, in turn, is divided into a front area 5 and a back area 4 by a partition 8. The back area 4, in turn, is divided into outer and inner areas by another tube 4b. In this way, in a cold start-up operation, for example, a countercurrent can be generated in the outer area in order to prevent recirculation of hot flue gases during cold start-up. It must be noted, however, that tube 4b is not a requirement in order to carry out a smooth cold start-up and stationary operation.

Partition 8 comprises a plurality of openings 9, 12 and 17. Primary air flows through openings 9 into mixing zone 6. In a cold start-up operation, blocking air flows through openings 17 into the front portion 5 of mixing zone 6 in order to prevent, in cold start-up operation, flue gases from being recirculated into mixing zone 6. In the present embodiment, the primary air PL and the blocking air are separated from each other in the back area 4 by a tube 46. A fuel supply means 10 is arranged centrally and coaxially with the center axis of the burner, in which, through its center channel 11, fuel is injected into space 5 with or without an impulse. The fuel passes into space 5 via openings 12. In space 5, a mixing tube 7 is arranged coaxially with the center axis. Mixing tube 7 and tube 3 thus form an annular channel 30 extending from a front end 31 to the beginning of mixing zone 6 of mixing tube 7.

A flame tube 13 is arranged downstream from mixing zone 6. Combustion tube 13 is coaxially aligned with the center axis of the burner. It must be noted that flame tube 13 has a length which is shorter than radiant tube 1 so that hot flue gases can exit at the downstream end of flame tube 13 and can flow back into annular space 18 formed by flame tube 13 and radiant tube 1. Flame tube 13 is arranged at its end face 13a at a distance from exit 15 of the flow channel for the secondary air SL. This forms a transition space 16 between flame tube 13 and the exit opening of the secondary air SL.

In particular, it must be noted that the secondary air SL is not fed to the combustion zone 14 within combustion tube 13 with the aid of small feeding tubes, but that the flue gas flows T_{1AB} and SL freely intersect each other in countercurrent. The term in countercurrent means that the flue gas flow T_{1AB} and the secondary air flow SL continue to flow in opposite directions. For short periods of time, the flow directions can also enclose angles of more or less 90°, but after a certain distance they flow in opposite directions. In the present case, hot flue gas T_{AB} flows through annular channel 18 in countercurrent to the flow direction of fuel B. In transition space 16, a portion of the hot flue gas flow T_{AB} is fed into recuperator 2, a first portion T_{1AB} is sucked into transition area 16 by the injector effect and is split into a partial flue gas flow T_{11AB} which flows into the combustion zone 14 and a portion T_{12AB} which continues to flow in the annular gap 30 between tube 3 and mixing tube 7 in countercurrent to the secondary air SL and the fuel-primary-air mixture in mixing zone 6 in mixing tube 7 and is redirected at the end of recuperator 2 into mixing zone 6 by the injector effect of the primary air PL. The injector effect of the secondary air flow SL and the primary air flow PL must be adapted to each other to optimize the exhaust air flows.

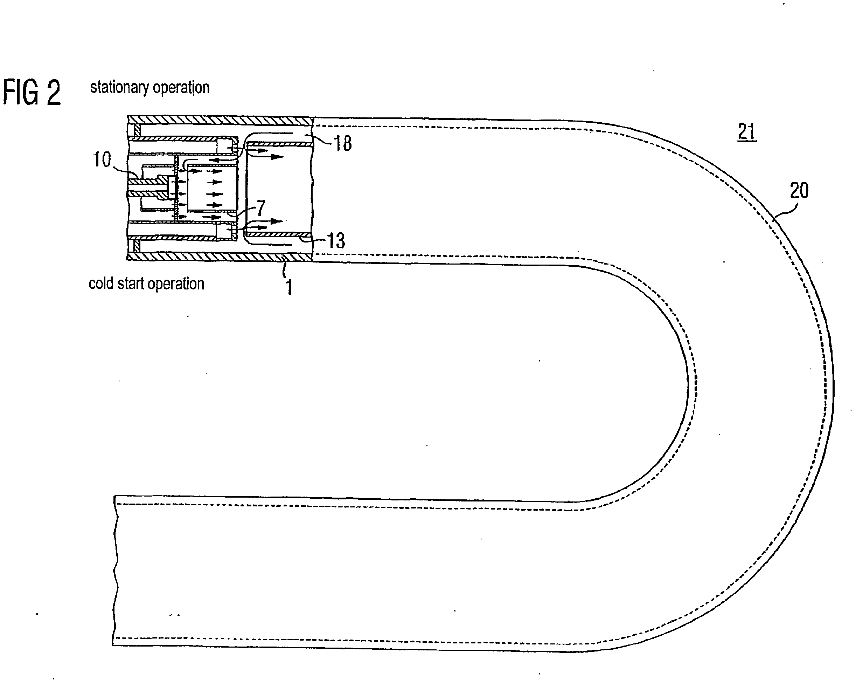

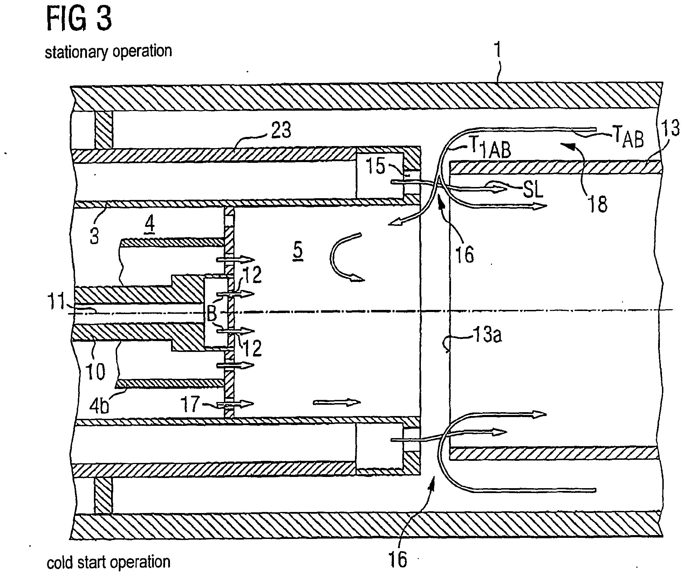

As already mentioned, Fig. 2 shows an elevational view of a burner in a U-shaped radiant tube 20. Here, hot flue gas is redirected at the end of comubustion tube 13, which has a certain length, into annular space 18 and recycled in the direction of the burner. Radiant tube 20 and combustion tube 13 can have strongly differing lengths. Fig. 3 shows a burner similar to the one shown in Fig. 2. However, there is no mixing tube 7 in mixing zone 6. A portion of flue gas is not extracted either. The annular gap between components 1 and 23 is closed in the present embodiment, it could be open, however, to exhaust flue gases. The basic guidance of the flue gas in an intersecting flow with the secondary air SL is identical to the one of Figs. 1 and 2.

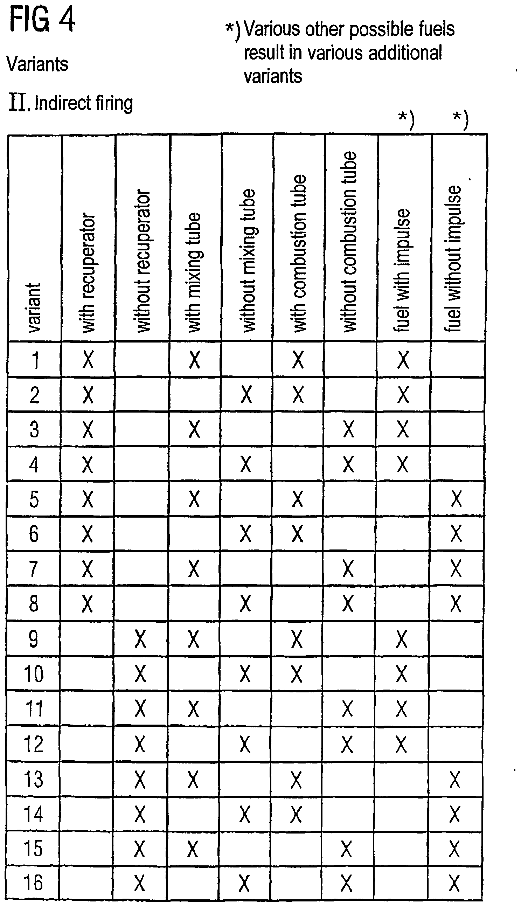

As can be seen from the table according to Fig. 4, a burner according to the present invention as shown in Figs. 1 to 3 can be used for indirect firing with a recuperator, without a recuperator, with a combustion or mixing tube, without a mixing tube, with a combustion tube, without a combustion tube. Further variants are also possible, in which the fuel is injected into mixing zone 6 with or without an impulse.

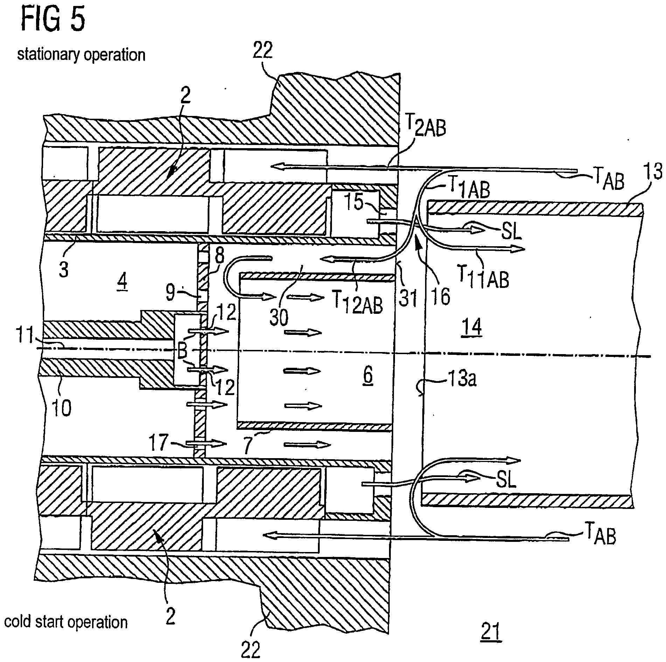

The longitudinal sectional view of Fig. 5 shows another exemplary embodiment of a burner according to the present invention for indirect firing. Unlike the above-explained inventive embodiments of a burner, there is a direct contact between the furnace atmosphere and the burner flame and the hot flue gases. Due to the arrangement and configuration of the feeding of the secondary air SL, there is still, however, a recirculation of hot flue gases T_{1AB} despite the elimination of the radiant tube. The whole of the burner is not within a portion of radiant tube 1, but in a sheath 22, which, however, in turn, as with the above-explained embodiment of a burner of the present invention according to Fig. 1, has a recuperator 2. The recirculation of the flue gases T_{11AB} and T_{12AB} is identical to the recirculation in the previously explained embodiments of a burner according to the present invention. In a transition area 16 between exit opening 15 for secondary air SL and the end face 13a of combustion tube 13, there is, again, a free flow of the two gas flows of the secondary air SL and the flue gas T_{1AB} in countercurrent in the spirit of the present invention. Part of the hot flue gas T_{1AB} is sucked into combustion tube 13 together with the secondary air SL, a different part is sucked into annular gap 30 between tube 3 and mixing tube 7 and mixed with fuel B in mixing zone 6 formed by mixing tube 7.

As mentioned before, by the introduction of a partial flow T_{2AB} of the hot flue gases T_{AB} through recuperator 2, the secondary air SL is preheated, before it enters combustion zone 14. In the same way, as with the previously explained burners with indirect firing, in the exemplary embodiment shown here of a burner of the present invention with direct firing, a portion of the hot flue gases is fed in annular zone 30 in countercurrent to the secondary air SL and the mixture in mixing zone 6 so that a portion of the heat of the hot flue gases T_{12AB} is transferred both to the secondary air SL passed through the recuperator and to the fuel-air mixture in mixing zone 6.

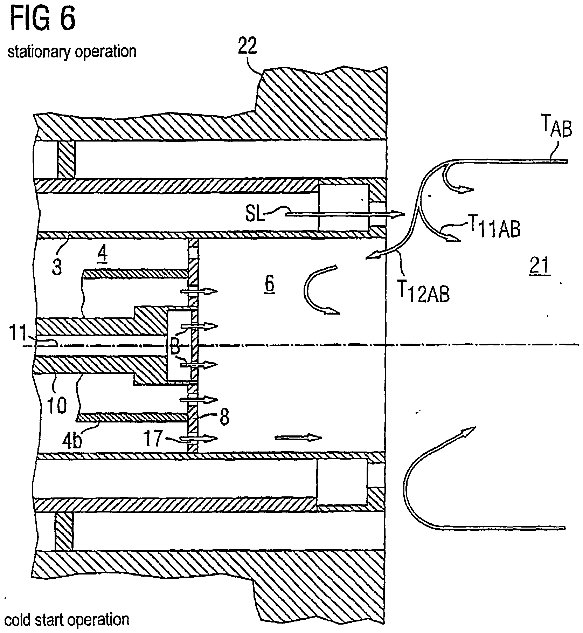

In another embodiment of a burner according to the present invention shown in Fig. 6 for direct firing, unlike the embodiment of an inventive burner shown in Fig. 5, flame tube 13 has also been eliminated. There is no recuperator integrated in sheath 22 on the outside of the burner. As in Fig. 3, the outer annular gap is closed off, so that there is not flue gas extraction. If desired, however, a portion of hot flue gases could be extracted through it. To do this, the annular gap would have to be open.

Mixing zone 6 is not defined by mixing tube 7 but by outer tube 3 which forms the inner circumferential surface of the secondary air supply. Again, the flue gases T_{AB} are recirculated due to the configuration of the supply of the secondary air SL and the primary air PL so that hot flue gases also enter into mixing zone 6.

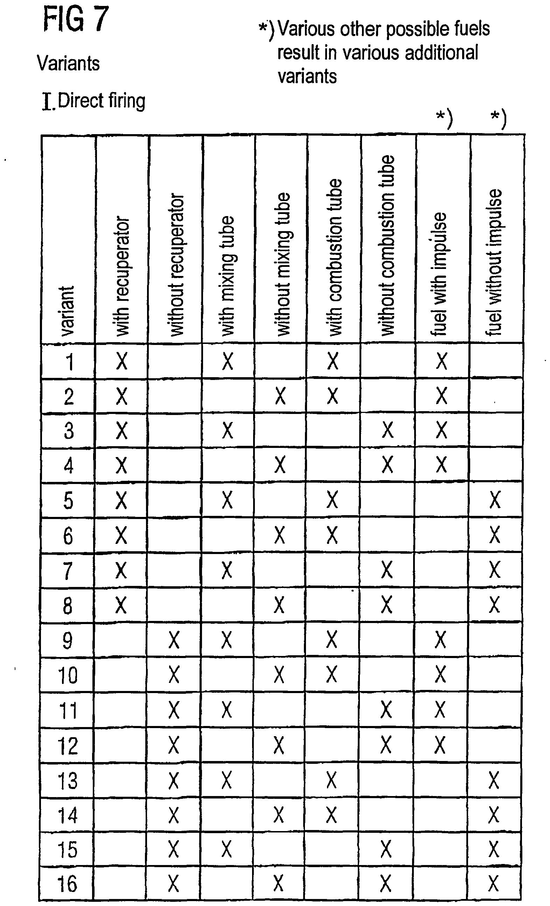

Finally, Fig. 7 shows a list in the form of a table of the possible variants of burners of the present invention with direct firing. Again, it is possible to configure the burner of the present invention with or without a recuperator, with a mixing tube, without a mixing tube, with a combustion tube or without a combustion tube. As with the previously explained embodiments of inventive burners with indirect firing, it is also possible to supply fuel with or without an impulse.

It can be seen from the explained embodiments, in particular, that with all burners according to the present invention, both with direct and indirect firing, a mixing zone 6 is spatially separate from a combustion zone 14. To achieve this, the fuel supply means is further back than a secondary air supply means. In particular, the primary air supply means is arranged in the area of the fuel supply means while the secondary air is only introduced downstream after mixing zone 6.

Incidentally, in should be noted that in all embodiments, as shown in the bottom halves of the various figures, in cold start-up operation, the recirculation of hot flue gases T_{12AB} is reduced or prevented by a special air introduction through exit opening 17, i.e. an air countercurrent is built up which reduces recirculation in the mixing zone 6, for example, of hot flue gases from T_{12AB},

Finally, it should be noted that the burner can also be configured in such a way that switching from a cold start-up operation to stationary operation or using a special air introduction through exit openings 17 for a cold start-up operation is not necessary.

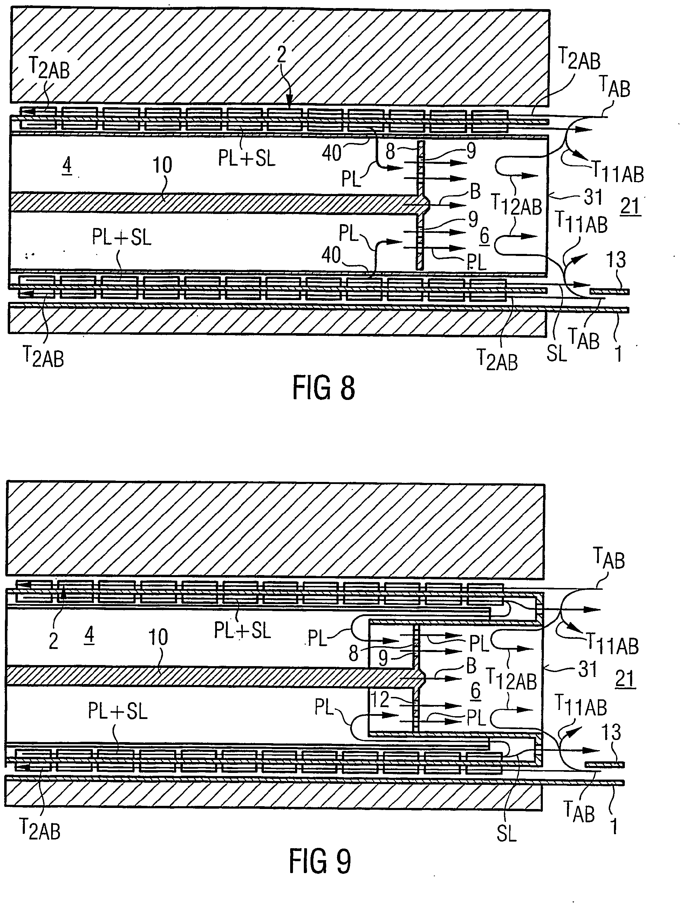

In Fig. 8, a longitudinal sectional view of another exemplary embodiment of a burner according to the present invention is shown, which can be used for direct firing (top half of Fig. 8) or for indirect firing in a radiant heating tube 1 (bottom half of Fig. 8). Unlike the burner of the present invention shown in Fig. 5, the primary air PL is preheated together with the secondary air SL in a recuperator 2. In this embodiment no mixing tube is used. As can be seen from Fig. 8, the primary air PL and the secondary air SL commonly flow from left to right within recuperator 2. In front of partition 8, one or more openings 40 are present in recuperator 2, through which air can flow into the back portion 4 of partition 8 and where it can flow, now as primary air PL, into mixing zone 6 through openings 12. However, only part of the air flow flowing in recuperator 2 escapes through openings 40, so that the other part escapes as secondary air SL at the exit end or the front end 31 of the mixing zone and flows in free countercurrent to the recirculated hot flue gas T_{AB} or its partial air flow T_{11AB}. Unlike the top half of Fig. 8, a radiant tube 1 is present in the bottom half of the figure, in which a flame tube 13 extends coaxially. Flame tube 13 ends at a distance from the front end 31 so that flue gases T_{AB} recirculated there are recirculated in countercurrent to the secondary air SL and flow into combustion zone 14.

Fig. 9 shows another exemplary embodiment of a burner according to the present invention. Again, the top half of the figure shows a burner of the present invention for direct firing while the bottom half of the figure shows a burner of the present invention for indirect firing in a radiant tube 1. It can be seen that as with the burner approach shown in Fig. 8 primary air PL and secondary air SL is commonly passed from left to right in a recuperator 2. Prior to the exit of the secondary air SL from the front end 31 of the burner, a redirection means or redirecting channel is present which feeds the primary air PL to the back space of partition 8. The preheated primary air PL then escapes and is mixed with the fuel B. The secondary air SL, as with the other burners of the present invention, flows in free countercurrent to the recirculated hot flue gases T_{11AB} or T_{AB}. The burner shown in Fig. 9 is thus different from the burner shown in Fig. 8, in that primary air PL is passed right up to the end area of recuperator 2. After the primary air PL is redirected, it flows into mixing zone 6.

## Claims

1. A method of operating a burner, wherein
- fuel (B) is fed in a mixing zone (6),secondary air (SL) is fed downstream from the mixing zone (6) into a combustion zone (14) spatially separate from the mixing zone (6) and in which the fuel (B) enriched by said secondary air (SL) reacts,
**characterized in that**
- at least a portion (T_{12AB}) of the hot flue gases (T_{AB}) exiting the combustion zone (14) is recycled into the mixing zone (6) in such a way that the secondary air (SL) and the recycled portion of the flue gas freely intersect each other in a transition area (16) between the mixing zone (6) and the combustion zone (14) in countercurrent.

2. The method according to claim 1, wherein
- the fuel (B) and primary air (PL) are mixed with each other in the mixing zone (6),
- the fuel-primary-air mixture (B, PL) reacts in the combustion zone (14) downstream from the mixing zone (6), and
- the fuel-primary-air mixture (B, PL) is mixed with the secondary air (SL) in the combustion zone (14).

3. The method according to claim 1 or 2, wherein said portion of flue gas (T_{12AB}) is recycled to the mixing zone (6) in such a way that part of its heat is transferred at least to the secondary air (SL).

4. The method according to claims 2 and 3, wherein said portion of flue gas (T_{12AB}) is recycled to the mixing zone (6) in such a way that part of its heat is also transferred to the fuel-primary-air mixture in said mixing zone (6).

5. The method according to claim 2 and any one of claims 3 to 4, wherein said portion of flue gas (T_{12AB}) is fed in countercurrent to the fuel-primary-air mixture (B, PL) and in countercurrent to the secondary air (SL) between the two flows (B, PL; SL).

6. The method according to claim 5, wherein said portion of flue gas (T_{12AB}) is fed separated from the fuel-primary-air mixture (B, PL) and separated from the secondary air (SL) in countercurrent thereto.

7. The method according to any one of the preceding claims, wherein
- the portion (T_{12AB}) of the flue gases (TAB) recirculated to the entry of the mixing zone (6) is guided on the outside of a mixing tube (7) in countercurrent to the fuel-primary-air mixture (B, PL) in said mixing tube (7) and
- the secondary air (SL) is guided on the outside of the portion (T_{12AB}) of the flue gases (T_{AB}) recirculated to the entry of the mixing zone (6) in countercurrent thereto.

8. The method according to claim 2 and any one of claims 3 to 7, wherein the fuel-primary-air mixture (B, PL) is mixed with the secondary air (SL) downstream of the mixing zone (6).

9. The method according to any one of the preceding claims, wherein a portion (T_{11AB}) of the hot flue gases exiting from the combustion zone (14) is recirculated to the entry (13a) of the combustion zone (14).

10. The method according to any one of claims 1 to 9, wherein a portion (T_{2AB}) of the flue gases is fed through a heat exchanger (2) and then exhausted from the burner, wherein the secondary air is guided in said heat exchanger (2) in countercurrent to said portion of flue gas (T_{2AB})

11. The method according to claim 2 and any one of claims 3 to 10, wherein a portion (T_{2AB}) of the flue gases (T_{AB}) is fed through a heat exchanger or recuperator (2) and then exhausted from the burner, wherein the primary air (PL) and the secondary air (SL) are fed in the recuperator (2) in countercurrent to said portion of flue gas (T_{2AB}).

12. The method according to claim 11, wherein the primary air (PL) and the secondary air(SL) commonly flow over a part of the distance in the recuperator (2) and then the primary air (PL) escapes from the recuperator (2) through at least one exit opening (40) and is fed into the area of the fuel supply (B) and the secondary air (SL) freely exits at the end of the recuperator (2) so that it freely intersects the recycled portion of flue gas (T_{12AB}) in the transition area (16) in countercurrent.

13. The method according to claim 11, wherein the primary air (PL) and the secondary air (SL) commonly flow up to the end of the recuperator (2), and then the primary air (PL) is fed by means of flow redirection into the area of the fuel supply (B), and the secondary air (SL) freely exits at the end of the recuperator (2), so that it freely intersects the recycled portion of flue gas (T_{12AB)} in the transition area (16) in countercurrent.

14. The method according to claim 10, wherein the portions of flue gas (T_{1AB},T_{2AB}) commonly flow up to the beginning of the combustion zone (14) in countercurrent to the fuel-primary-air mixture (B, PL) in the combustion zone (14).

15. The method according to any one of the preceding claims, wherein the combustion zone (14) is formed by a combustion tube (13), along the outside of which the portions of flue gas(T_{1AB}, T_{2AB}) are fed.

16. The method according to any one of the preceding claims, wherein a portion of flue gas (T_{1AB}) flows into said transition area (16) in countercurrent to the secondary air (SL) at a position radially further to the outside than the secondary air (SL).

17. The method according to any one of the preceding claims, wherein the fuel (B) is injected with an impulse.

18. The method according to any one of claims 1 to 16, wherein the fuel (B) is injected without an impulse.

19. A burner for liquid or gaseous fuels, comprising:
- a mixing zone (6),
- a fuel supply means (10,11, 12) configured to introduce fuel (B) into the mixing zone (6),
- a secondary air supply means (15) configured to supply secondary air (SL) to the fuel (B) into a combustion zone (14), wherein the fuel supply means (10, 11, 12) is further back than the secondary air supply means (15), the combustion zone (14) being disposed downstream from the mixing zone (6), wherein the fuel (B) enriched by said secondary air (SL) reacts, and
**characterized in that**
- a flue gas recycling means (13, 18) configured such that at least a portion (T_{12AB}) of the hot flue gases (T_{AB}) exiting from the combustion zone (14) is recycled into the mixing zone (6) in such a way that the secondary air (SL) and the recirculated portion (T_{12AB}) of the flue gases (T_{AB}) freely intersect each other in a transition area (16) between the mixing zone (6) and the combustion zone (14) in countercurrent.

20. The burner according to claim 19, including:
- a primary air supply means (4, 8) for supplying primary air (PL) into the mixing zone (6) in which the fuel (B) and the primary air (PL) are mixed with each other,
- wherein in the combustion zone (14) the fuel-primary-air mixture (B, PL, SL) enriched with the secondary air (SL) reacts,
- wherein the secondary air (SL) is fed to the fuel-primary-air mixture (B, PL).

21. The burner according to claim 19 or 20, further comprising a transition gap (16) between the mixing zone (6) and the combustion zone (14) into which the secondary air supply means (15) and the flue gas recycling means (13, 18) open out, wherein the openings of the secondary air supply means (15) and the flue gas recycling means (13, 18) are aligned to each other in such a way that the flows of secondary air (SL) and recirculated flue gas (T_{1AB}) intersect.

22. The burner according to claim 21, wherein the openings of the secondary air supply means (15) and the flue gas recycling means (13, 18) form an angle of 90° or more.

23. The burner according to any one of claims 19 to 22, wherein the flue gas recycling means (30) comprises at least one entry opening which opens out into the transition area (16) and comprises at least one channel at the beginning of the mixing zone (6) in order to recycle a portion (T_{12AB}) of the hot flue gases (T_{AB}) exiting from the combustion zone (14) to the mixing zone (6).

24. The burner according to any one of claims 19 to 23, wherein the mixing zone (6) is defined by a mixing tube (7) and, together with a tube (3) concentrically surrounding the mixing tube (7), defines an annular space which forms said flue gas recycling means (30), with the aid of which a portion (T_{12AB}) of said hot flue gases is recyclable from the transition area (16) to the mixing zone (6).

25. The burner according to any one of claims 19 to 24, wherein the combustion zone (14) is defined by a combustion tube (13), and an end face (13a) of the combustion tube (13) is spaced from at least one exit opening (15) for secondary air (SL) so that the transition area (16) is formed therebetween.

26. The burner according to any one of claims 19 to 25, wherein a recuperator (2) is present which is concentrically disposed to said mixing zone (6) and through which the secondary air (SL) is fed and a portion of the hot flue gases can flow in countercurrent, wherein at least one entry opening for hot flue gases opens into said transition area (16), or radially more to the outside.

27. The burner according to claim 19 and any one of claims 20 to 25, wherein a recuperator (2) is present, and primary air (PL) and secondary air (SL) are commonly guide through it, and a portion of the hot flue gases flows in countercurrent, and in the rear area of the partition (8) at least one opening (40) is present through which a portion of the common air flow (PL, SL) flows out and flows as primary air (PL) through the partition (8) out of openings (9).

28. The burner according to claim 19 and any one of claims 20 to 25, wherein a recuperator (2) is present and through which primary air (PL) and secondary air (SL) are commonly fed, and a portion of the hot flue gases flows in countercurrent, and at the end of the recuperator (2) a flow redirection means for the primary air (PL) is present which feeds the primary air (PL) to the rear area (4) of the partition (8) and the secondary air (SL) exits at the end of the recuperator (2).

29. The burner according to any one of the claims 19-28, wherein the mixing zone (6) is formed by a mixing tube (7), within which the fuel (B) is mixed with primary air (PL).

## Patentansprüche

1. Verfahren zum Betreiben eines Brenners, bei dem
- Brennstoff (B) in eine Mischzone (6) eingebracht wird,
- Sekundärluft (SL) stromabwärts der Mischzone (6) in eine Verbrennungszone (14) eingebracht wird, die von der Mischzone (6) räumlich getrennt ist und in der der mit der Sekundärluft (SL) angereicherte Brennstoff (B) reagiert,
**dadurch gekennzeichnet, dass** zumindest ein Teil (T_{12AB}) der aus der Verbrennungszone (14) austretenden, heißen Abgase (T_{AB}) in die Mischzone (6) derart zurückgeleitet wird, dass die Sekundärluft (SL) und die zurückgeleitete Teilmenge des heißen Abgases sich einander in einem Übergangsbereich (16) zwischen der Mischzone (6) und der Verbrennungszone (14) im Gegenstrom frei kreuzen.

2. Verfahren nach Anspruch 1, wobei
- der Brennstoff (B) und Primärluft (PL) in der Mischzone (6) miteinander vermischt werden,
- das Brennstoff-Primärluft-Gemisch (B, PL) in der Verbrennungszone (14) stromab der Mischzone (6) reagiert, und
- das Brennstoff-Primärluft-Gemisch (B, PL) in der Verbrennungszone (14) mit der Sekundärluft (SL) vermischt wird.

3. Verfahren nach Anspruch 1 oder 2, wobei die Abgas-Teilmenge (T_{12AB}) derart zur Mischzone (6) zurückgeleitet wird, dass ein Teil von deren Wärme zumindest an die Sekundärluft (SL) abgegeben wird.

4. Verfahren nach Anspruch 2 oder 3, wobei die Abgas-Teilmenge (T_{12AB}) derart zur Mischzone (6) zurückgeleitet wird, dass ein Teil von deren Wärme auch an das Brennstoff-Primärluft-Gemisch in der Mischzone (6) abgegeben wird.

5. Verfahren nach Anspruch 2 und deinem der Ansprüche 3 bis 4, wobei die Abgas-Teilmenge (T12AB) sowohl im Gegenstrom zum Brennstoff-Primärluft-Gemisch (B, PL) als auch im Gegenstrom zur Sekundärluft (SL) zwischen diesen beiden Strömen (B, PL; SL) geleitet wird.

6. Verfahren nach Anspruch 5, wobei die Abgas-Teilmenge (T12AB) getrennt zum Brennstoff-Primärluft-Gemisch (B, PL) und getrennt zur Sekundärluft (SL) im Gegenstrom hierzu geleitet wird.

7. Verfahren nach einem der voranstehenden Ansprüche, bei dem
- der zum Eingang der Mischzone rezirkulierte Teil (T_{12AB}) der Abgase (T_{AB}) an der Außenseite des Mischrohrs (7) im Gegenstrom zum Brennstoff-Primärluft-Gemisch (B, PL) im Mischrohr (7) geführt wird und
- die Sekundärluft (SL) außenseitig des zum Eingang der Mischzone rezirkulierten Teils (T_{12AB}) der Abgase (T_{AB}) im Gegenstrom hierzu geführt wird.

8. Verfahren nach Anspruch 2 und einem der voranstehenden Ansprüche 3 bis 7, bei dem das Brennstoff-Primärluft-Gemisch (B, PL) stromab der Mischzone (6) mit der Sekundärluft (SL) vermischt wird.

9. Verfahren nach einem der voranstehenden Ansprüche, wobei ein Teil (T11AB) der aus der Verbrennungszone (14) austretenden, heißen Abgase zum Eingang (13a) der Verbrennungszone (14) rezirkuliert wird.

10. Verfahren nach einem der Ansprüche 1 bis 9, wobei ein Teil (T2AB) der Abgase durch einen Wärmetauscher (2) hindurchgeführt und dann aus dem Brenner abgeführt wird, wobei die Sekundärluft im Wärmetauscher (2) im Gegenstrom zu dieser Abgas-Teilmenge (T_{2AB}) geführt wird.

11. Verfahren nach Anspruch 2 und einem der Ansprüche 3 bis 10, wobei ein Teil (T2AB) der Abgase (TAB) durch einen Wärmetauscher oder Rekuperator (2) hindurch geführt und dann aus dem Brenner abgeführt wird, wobei die Primärluft (PL) und die Sekundärluft (SL) in dem Rekuperator (2) im Gegenstrom zu der Abgas-Teilmenge (T2AB) geführt wird.

12. Verfahren nach Anspruch 11, wobei die Primärluft (PL) und die Sekundärluft (SL) gemeinsam über eine Teilstrecke in dem Rekuperator (2) strömen und dann die Primärluft (PL) aus dem Rekuperator (2) durch wenigstens eine Auslassöffnung (40) austritt und dann in den Bereich der Brennstoffzuführung (B) geleitet wird und die Sekundärluft (SL) an dem Ende des Rekuperators (2) frei austritt, so dass sie den rezirkulierten Teil des Abgases (T_{12AB}) in dem Übergangsbereich (16) im Gegenstrom frei kreuzt.

13. Verfahren nach Anspruch 11, wobei die Primärluft (PL) und die Sekundärluft (SL) gemeinsam bis zum Ende des Rekuperators (2) strömen und dann die Primärluft (PL) mittels einer Strömungsumlenkung in den Bereich der Brennstoffzuführung (B) geleitet wird und die Sekundärluft (SL) an dem Ende des Rekuperators (2) frei austritt, so dass sie den rezirkulierten Teil des Abgases (T12AB) im Übergangsbereich (16) im Gegenstrom frei kreuzt.

14. Verfahren nach Anspruch 10, wobei die Teilmengen des Abgases (T1AB, T2AB) gemeinsam bis zum Beginn der Verbrennungszone (14) im Gegenstrom zum Brennstoff-Primärluft-Gemisch (B, PL) in der Verbrennungszone (14) strömen.

15. Verfahren nach einem der voranstehenden Ansprüche, wobei die Verbrennungszone (14) durch ein Verbrennungsrohr (13) gebildet ist, an dessen Außenseite die Teilmengen des Abgases (T1AB, T2AB) geleitet werden.

16. Verfahren nach einem der voranstehenden Ansprüche, wobei eine Teilmenge des Abgases (T_{1AB}) in den Übergangsbereich (16) im Gegenstrom zur Sekundärluft (SL) an einer radial weiter außen liegenden Stelle als die Sekundärluft (SL) strömt.

17. Verfahren nach einem der voranstehenden Ansprüche, wobei der Brennstoff (B) mit einem Impuls eingespritzt wird.

18. Verfahren nach einem der Ansprüche 1 bis 16, bei dem der Brennstoff (B) ohne einen Impuls eingespritzt wird.

19. Brenner für flüssige oder gasförmige Brennstoffe, mit:
- einer Mischzone (6)
- einer Brennstoff-Zuführeinrichtung (10, 11, 12), die zum Zuführen des Brennstoffs (B) in die Mischzone (6) ausgebildet ist,
- einer Sekundärluft-Zuführeinrichtung (15), die zum Zuführen von Sekundärluft (SL) zu dem Brennstoff (B) in eine Verbrennungszone (14) ausgebildet ist, wobei die Brennstoff-Zuführeinrichtung (10, 11, 12) weiter zurück als die Sekundärluft-Zuführeinrichtung (15) liegt und die Verbrennungszone (14) stromab der Mischzone (6) angeordnet ist, in der der mit der Sekundärluft (SL) angereicherte Brennstoff (B) reagiert, und **dadurch gekennzeichnet, dass** eine Abgas-Rückführeinrichtung (13, 18) derart ausgestaltet ist, dass zumindest ein Teil (T_{12AB}) der aus der Verbrennungszone (14) austretenden, heißen Abgase (T_{AB}) so zurückgeleitet wird, dass die Sekundärluft (SL) und der rezirkulierte Teil (T_{12AB}) der Abgase (T_{AB}) sich einander in einem Übergangsbereich (16) zwischen der Mischzone (6) und der Verbrennungszone (14) im Gegenstrom frei kreuzen.

20. Brenner nach Anspruch 19 mit:
- einer Primärluft-Zuführeinrichtung (4, 8) zum Zuführen von Primärluft (PL) in die Mischzone (6), in der der Brennstoff (B) und die Primärluft (PL) miteinander vermischt werden,
- wobei das mit der Sekundärluft (SL) angereicherte Brennstoff-Primärluft-Gemisch (B, PL, SL) in der Verbrennungszone (14) reagiert,
- wobei die Sekundärluft (SL) zu dem Brennstoff-Primärluft-Gemisch (B, PL) zugeführt wird.

21. Brenner nach Anspruch 19 oder 20, des Weiteren umfassend einen Übergangsspalt (16) zwischen der Mischzone (6) und der Verbrennungszone (14), in den die Sekundärluft-Zuführungseinrichtung (15) und die Abgas-Rückführeinrichtung (13, 18) münden, wobei die Mündungen der Sekundärluft-Zuführeinrichtung (15) und der Abgas-Rückführeinrichtung (13, 18) so zueinander ausgerichtet sind, dass sich die Strömungen von Sekundärluft (SL) und rezirkuliertem Abgas (T1AB) kreuzen.

22. Brenner nach Anspruch 21, wobei die Mündungen in der Sekundärluft-Zuführeinrichtung (15) und der Abgas-Rückführeinrichtung (13, 18) einen Winkel von 90° oder mehr einschließen.

23. Brenner nach einem der Ansprüche 19 bis 22, bei dem die Abgas-Rückführeinrichtung (30) zumindest eine Eintrittsöffnung umfasst, die in den Übergangsbereich (16) mündet und zumindest einen Kanal am Beginn der Mischzone (6) umfasst, um einen Teil (T12AB) der aus der Verbrennungszone (14) austretenden, heißen Abgase (TAB) zur Mischzone (6) zurückleiten.

24. Brenner nach einem der Ansprüche 19 bis 23, bei dem die Mischzone (6) von einem Mischrohr (7) definiert ist und zusammen mit einem das Mischrohr (6) konzentrisch umgebenden Rohr (3) einen Ringraum definiert, der die Abgas-Rückführeinrichtung (30) bildet, mit der ein Teil (T12AB) der heißen Abgase von dem Übergangsbereich (16) zur Mischzone (6) zurückleitbar ist.

25. Brenner nach einem der Ansprüche 19 bis 24, bei dem die Verbrennungszone (14) von einem Verbrennungsrohr (13) definiert ist und eine Stirnseite (13a) des Verbrennungsrohrs (13) in einem Abstand zu zumindest einer Austrittsöffnung (15) für Sekundärluft (SL) angeordnet ist, so dass hier zwischen der Übergangsbereich (16) gebildet ist.

26. Brenner nach einem der Ansprüche 19 bis 25, bei dem ein Rekuperator (2) vorhanden ist, der konzentrisch zur Mischzone (6) angeordnet ist und durch den die Sekundärluft (SL) geleitet wird und ein Teil der heißen Abgase im Gegenstrom strömen kann, wozu zumindest eine Eintrittsöffnung für heiße Abgase im Übergangsbereich (16) oder radial weiter außen mündet.

27. Brenner nach Anspruch 19 und einem der Ansprüche 20 bis 25, bei dem ein Rekuperator (2) vorhanden ist und Primärluft (PL) und Sekundarluft (SL) durch diesen gemeinsam geleitet werden, und ein Teil der heißen Abgase in Gegenstrom strömen und in dem hinteren Bereich der Unterteilung (8) wenigstens eine Öffnung (40) vorhanden ist, durch die ein Teil des gemeinsamen Luftstroms (PL, SL) ausströmt und als Primärluft (PL) durch die Unterteilung (8) aus den Öffnungen (9) strömt.

28. Brenner nach Anspruch 19 und einem der Ansprüche 20 bis 25, bei dem ein Rekuperator (2) vorhanden ist und durch den Primärluft (PL) und Sekundärluft (SL) gemeinsam geleitet werden und ein Teil der heißen Abgase im Gegenstrom strömen und an dem Ende des Rekuperators (2) eine Strömungsumlenkungseinrichtung für die Primärluft (PL) vorhanden ist, die die Primärluft (PL) zu dem hinteren Bereich (4) der Unterteilung (8) leitet und die Sekundärluft (SL) an dem Ende des Rekuperators (2) austritt.

29. Brenner nach einem der Ansprüche 19-28, bei dem die Mischzone (6) durch ein Mischrohr (7) gebildet ist, in dem der Brennstoff (B) mit der Primärluft (PL) vermischt wird.

## Revendications

1. Procédé d'exploitation d'un brûleur, dans lequel :
- du carburant (B) est chargé dans une zone de mélange (6),
- de l'air secondaire (SL) est chargé en aval de la zone de mélange (6) dans une zone de combustion (14) séparément dans l'espace de la zone de mélange (6) et dans laquelle le carburant (B) enrichi par ledit air secondaire (SL) réagit,
**caractérisé en ce qu'**au moins une portion (T_{12AB}) des gaz de combustion chauds (T_{AB}) sortant de la zone de combustion (14) est recyclée dans la zone de mélange (6) de sorte que l'air secondaire (SL) et la portion recyclée du gaz de combustion se coupent l'un l'autre librement dans une région de transition (16) entre la zone de mélange (6) et la zone de combustion (14) à contre-courant.

2. Procédé selon la revendication 1, dans lequel :
- le carburant (B) et l'air primaire (PL) sont mélangés l'un l'autre dans la zone de mélange (6),
- le mélange carburant-air primaire (B, PL) réagit dans la zone de combustion (14) en aval de la zone de mélange (6) et
- le mélange carburant-air primaire (B, PL) est mélangé à l'air secondaire (SL) dans la zone de combustion (14).

3. Procédé selon la revendication 1 ou 2, dans lequel ladite portion de gaz de combustion (T_{12AB}) est recyclée dans la zone de mélange (6) de sorte qu'une partie de sa chaleur soit transférée au moins à l'air secondaire (SL).

4. Procédé selon les revendications 2 et 3, dans lequel ladite portion de gaz de combustion (T_{12AB}) est recyclée dans la zone de mélange (6) de sorte qu'une partie de sa chaleur soit également transférée au mélange carburant-air primaire dans ladite zone de mélange (6).

5. Procédé selon la revendication 2 et l'une quelconque des revendications 3 à 4, dans lequel ladite portion de gaz de combustion (T_{12AB}) est chargée à contre-courant avec le mélange carburant-air primaire (B, PL) et à contre-courant avec l'air secondaire (SL) entre les deux écoulements (B, PL ; SL).

6. Procédé selon la revendication 5, dans lequel ladite portion de gaz de combustion (T_{12AB}) est chargée séparément du mélange carburant-air primaire (B, PL) et séparément de l'air secondaire (SL) à contre-courant avec celui-ci.

7. Procédé selon l'une quelconque des revendications précédentes, dans lequel :
- la portion (T_{12AB}) des gaz de combustion (TAB) remis en circulation à l'entrée de la zone de mélange (6) est guidée à l'extérieur d'un tube de mélange (7) à contre-courant avec le mélange carburant-air primaire (B, PL) dans ledit tube de mélange (7) et
- l'air secondaire (SL) est guidé à l'extérieur de la portion (T_{12AB}) des gaz de combustion (T_{AB}) remis en circulation à l'entrée de la zone de mélange (6) à contre-courant avec ceux-ci.

8. Procédé selon la revendication 2 et l'une quelconque des revendications 3 à 7, dans lequel le mélange carburant-air primaire (B, PL) est mélangé à l'air secondaire (SL) en aval de la zone de mélange (6).

9. Procédé selon l'une quelconque des revendications précédentes, dans lequel une portion (T_{11AB}) des gaz de combustion chauds sortant de la zone de combustion (14) est remise en circulation à l'entrée (13a) de la zone de combustion (14).

10. Procédé selon l'une quelconque des revendications 1 à 9, dans lequel une portion (T_{2AB}) des gaz de combustion est chargée à travers un échangeur de chaleur (2) et s'échappe ensuite du brûleur, dans lequel l'air secondaire est guidé dans ledit échangeur de chaleur (2) à contre-courant avec ladite portion de gaz de combustion (T_{2AB})

11. Procédé selon la revendication 2 et l'une quelconque des revendications 3 à 10, dans lequel une portion (T_{2AB}) des gaz de combustion (T_{AB}) est chargée à travers un échangeur ou un récupérateur de chaleur (2) et s'échappe ensuite du brûleur, dans lequel l'air primaire (PL) et l'air secondaire (SL) sont chargés dans le récupérateur (2) à contre-courant avec ladite portion de gaz de combustion (T_{2AB}).

12. Procédé selon la revendication 11, dans lequel l'air primaire (PL) et l'air secondaire (SL) s'écoulent communément sur une partie de la distance dans le récupérateur (2) et, ensuite, l'air primaire (PL) s'échappe du récupérateur (2) par au moins une ouverture de sortie (40) et est chargé dans la région de l'alimentation en carburant (B) et l'air secondaire (SL) sort librement à l'extrémité du récupérateur (2) de sorte qu'il coupe librement la portion recyclée de gaz de combustion T_{12AB}) dans la région de transition (16) à contre-courant.

13. Procédé selon la revendication 11, dans lequel l'air primaire (PL) et l'air secondaire (SL) s'écoulent communément jusqu'à l'extrémité du récupérateur (2) et, ensuite, l'air primaire (PL) est chargé par réorientation de l'écoulement dans la région de l'alimentation en carburant (B) et l'air secondaire (SL) sort librement à l'extrémité du récupérateur (2), de sorte qu'il coupe librement la portion recyclée du gaz de combustion (T_{12AB}) dans la région de transition (16) à contre-courant.

14. Procédé selon la revendication 10, dans lequel les portions de gaz de combustion (T_{1AB}, T_{2AB}) s'écoulent communément jusqu'au début de la zone de combustion (14) à contre-courant avec le mélange carburant-air primaire (B, PL) dans la zone de combustion (14).

15. Procédé selon l'une quelconque des revendications précédentes, dans lequel la zone de combustion (14) est formée par un tube de combustion (13) le long de l'extérieur duquel les portions du gaz de combustion (T_{1AB}, T_{2AB}) sont chargées.

16. Procédé selon l'une quelconque des revendications précédentes, dans lequel une portion de gaz de combustion (T_{1AB}) s'écoule dans ladite région de transition (16) à contre-courant avec l'air secondaire (SL) dans une position radialement plus éloignée vers l'extérieur que l'air secondaire (SL).

17. Procédé selon l'une quelconque des revendications précédentes, dans lequel le carburant (B) est injecté avec une impulsion.

18. Procédé selon l'une quelconque des revendications précédentes, dans lequel le carburant (B) est injecté sans impulsion.

19. Brûleur pour carburants liquides ou gazeux, comprenant :
- une zone de mélange (6),
- un moyen d'alimentation en carburant (10,11,12) configuré pour introduire du carburant (B) dans la zone de mélange (6),
- un moyen d'alimentation en air secondaire (15) configuré pour fournir de l'air secondaire (SL) au carburant (B) dans une zone de combustion (14), dans lequel le moyen d'alimentation en carburant (10, 11, 12) est encore plus en arrière que le moyen d'alimentation en air secondaire (15), la zone de combustion (14) étant disposée en aval de la zone de mélange (6), dans laquelle le carburant (B) enrichi par ledit air secondaire (SL) réagit, et
**caractérisé en ce qu'**un moyen de recyclage de gaz de combustion (13, 18) est configuré de sorte qu'au moins une portion (T_{12AB}) des gaz de combustion chauds (T_{AB}) sortant de la zone de combustion (14) soit recyclée dans la zone de mélange (6) de sorte que l'air secondaire (SL) et la portion remise en circulation (T_{12AB}) des gaz de combustion (T_{AB}) se coupent librement l'un l'autre dans une région de transition (16) entre la zone de mélange (6) et la zone de combustion (14) à contre-courant.

20. Brûleur selon la revendication 19, comprenant :
- un moyen d'alimentation en air primaire (4, 8) pour charger de l'air primaire (PL) dans la zone de mélange (6), dans laquelle le carburant (B) et l'air primaire (PL) sont mélangés l'un à l'autre,
- dans lequel, dans la zone de combustion (14), le mélange carburant-air primaire (B, PL, SL) enrichi en air secondaire (SL) réagit, et
- dans lequel l'air secondaire (SL) est chargé dans le mélange carburant-air primaire (B, PL).

21. Brûleur selon la revendication 19 ou 20, comprenant en outre un intervalle de transition (16) entre la zone de mélange (6) et la zone de combustion (14), dans laquelle le moyen d'alimentation en air secondaire (15) et le moyen de recyclage de gaz de combustion (13, 18) débouche à l'extérieur, dans lequel les ouvertures du moyen d'alimentation en air secondaire (15) et du moyen de recyclage de gaz de combustion (13, 18) sont alignés l'une avec l'autre de sorte que les écoulements d'air secondaire (SL) et de gaz de combustion remis en circulation (T_{1AB}) se coupent.

22. Brûleur selon la revendication 21, dans lequel les ouvertures du moyen d'alimentation en air secondaire (15) et du moyen de recyclage de gaz de combustion (13, 18) forment un angle de 90 ° ou plus.

23. Brûleur selon l'une quelconque des revendications 19 à 22, dans lequel le moyen de recyclage de gaz de combustion (30) comprend au moins une ouverture d'entrée qui débouche à l'extérieur dans la région de transition (16) et comprend au moins un canal au début de la zone de mélange (6) afin de recycler une portion (T_{12AB}) des gaz de combustion chauds (T_{AB}) sortant de la zone de combustion (14) dans la zone de mélange (6).

24. Brûleur selon l'une quelconque des revendications 19 à 23, dans lequel la zone de mélange (6) est définie par un tube de mélange (7) et, conjointement avec un tube (3) entourant de manière concentrique le tube de mélange (7), définit un espace annulaire qui forme ledit moyen de recyclage de gaz de combustion (30), à l'aide duquel une portion (T_{12AB}) desdits gaz de combustion chauds est recyclable de la région de transition (16) à la zone de mélange (6).

25. Brûleur selon l'une quelconque des revendications 19 à 24, dans lequel la zone de combustion (14) est définie par un tube de combustion (13), et une face d'extrémité (13a) du tube de combustion (13) est espacée d'au moins une ouverture de sortie (15) pour l'air secondaire (SL) de sorte que la région de transition (16) soit formée entre eux.

26. Brûleur selon l'une quelconque des revendications 19 à 25, dans lequel il y a un récupérateur (2) qui est disposé de manière concentrique par rapport à ladite zone de mélange (6) et à travers lequel l'air secondaire (SL) est chargé et une portion des gaz de combustion chauds peut s'écouler à contre-courant, dans lequel au moins une ouverture d'entrée pour les gaz de combustion chauds débouche dans ladite région de transition (16), ou radialement plus vers l'extérieur.

27. Brûleur selon la revendication 19 et l'une quelconque des revendications 20 à 25, dans lequel il y a un récupérateur (2) et de l'air primaire (PL) et de l'air secondaire (SL) sont guidés communément à travers celui-ci, et une portion des gaz de combustion chauds s'écoule à contre-courant et, dans la région arrière de la division (8), il y a au moins une ouverture (40) par laquelle une portion de l'écoulement d'air commun (PL, SL) s'écoule à l'extérieur et s'écoule comme air primaire (PL) à travers la division (8) à l'extérieur des ouvertures (9).

28. Brûleur selon la revendication 19 et l'une quelconque des revendications 20 à 25, dans lequel il y a un récupérateur (2) et à travers lequel de l'air primaire (PL) et de l'air secondaire (SL) sont communément chargés et une portion des gaz de combustion chauds s'écoule à contre-courant et, à l'extrémité du récupérateur (2), il y a un moyen de réorientation d'écoulement pour l'air primaire (PL) qui charge en air primaire (PL) la région arrière (4) de la division (8) et de l'air secondaire (SL) sort à l'extrémité du récupérateur (2).

29. Brûleur selon l'une quelconque des revendications 19 à 28, dans lequel la zone de mélange (6) est formée par un tube de mélange (7), à l'intérieur duquel le carburant (B) est mélangé à de l'air primaire (PL).
